# EUROPÄISCHE PATENTSCHRIFT

(11) **EP 2 871 375 B1**
(45) Veröffentlichungstag und Bekanntmachung des Hinweises auf die Patenterteilung: **12.04.2017**
(21) Anmeldenummer: 14191144.6
(22) Anmeldetag: 30.10.2014
(51) Int. Cl.: F16B 21/04, F16B 37/06

(54) **Befestigungselement zur Anbringung an einem Bauteil, Zusammenbauteil umfassend das Befestigungselement sowie Verfahren zur Herstellung des Zusammenbauteils**
Fixing element for attachment onto a component, assembly component comprising the fastening element as well as a method for producing the assembly component
Élément de fixation destiné à l'application sur un composant, composant d'assemblage comprenant l'élément de fixation et procédé de fabrication du composant d'assemblage

(30) Priorität: 06.11.2013 DE 102013222484
(43) Veröffentlichungstag der Anmeldung: 13.05.2015
(73) Patentinhaber: Profil Verbindungstechnik GmbH & Co. KG, 61381 Friedrichsdorf (DE)
(72) Erfinder: Humpert, Dr. Richard, 61231 Bad Nauheim (DE)
(74) Vertreter: Manitz, Finsterwald & Partner GbR

(56) Entgegenhaltungen:
- WO-A1-2012/038928
- DE-A1- 10 226 668
- US-A- 6 146 072

## Beschreibung

Die vorliegende Erfindung betrifft ein Befestigungselement zur Anbringung an einem Bauteil.

Einer Vielzahl von Befestigungselementen herkömmlicher Bauart wird bei der Montage in ein vorgefertigtes Loch in dem Bauteil eingeführt und anschließend daran befestigt, beispielsweise durch einen Nietprozess. Eine andere Gruppe von Befestigungselementen ist derart ausgestaltet, dass sie während dem Anbringen an dem Bauteil ein Loch selbst in selbiges stanzen. Anschließend wird ein Abschnitt des Befestigungselements umgeformt, um eine zuverlässige Verbindung zwischen dem Befestigungselement und dem Bauteil zu schaffen.

Zwar sind die Verbindungen zwischen diesen Befestigungselementen und dem jeweiligen Bauteil in der Regel sehr zuverlässig. Allerdings müssen die genannten Befestigungselemente mit Funktionsabschnitten versehen sein, die ein Stanzen des Bauteils und/oder ein Vernieten des Befestigungselements ermöglichen. Solche Funktionsabschnitte wirken sich nachteilig auf das Gewicht des Befestigungselements aus. Zudem erfordern sie zusätzliche Arbeitsschritte bei der Herstellung der entsprechenden Befestigungselemente. Ferner muss das Bauteil vor oder im Zuge des Befestigungsprozesses perforiert werden, was zumindest in dem ersteren Fall einen zusätzlichen Arbeitsschritt erfordert. Das entstandene Loch stellt eine potentielle Leckagestelle dar, durch die ein gasförmiges und/oder flüssiges Medium treten kann. In gewissen Anwendungsfällen muss daher die Verbindung zwischen dem Befestigungselement und dem Bauteil durch zusätzliche Maßnahmen abgedichtet werden.

Ein Befestigungselement mit den Merkmalen des Oberbegriffs des Anspruchs 1 ist aus US 6,146,072 bekannt. In WO 2012/038928 A1 wird ein zylindermantelförmiges Verbindungselement für Container beschrieben, welches an beiden axialen Enden Umfangsverbreiterungen aufweist, die seitlich in längliche Aufnahmen eines jeweiligen Containers eingeschoben werden können und dort im Zusammenwirken mit an der jeweiligen Aufnahme ausgebildeten Lippen gehalten werden können.

Es besteht Bedarf für ein neues Konzept, das vielseitig einsetzbare Befestigungselemente umfasst, die auf einfache und zuverlässige Weise an einem Bauteil befestigbar sind, ohne dass die Dichtheit des Bauteils durch die Befestigung des Elements kompromittiert wird.

Die Lösung dieser Aufgabe erfolgt durch den jeweiligen Gegenstand der unabhängigen Ansprüche.

Das erfindungsgemäße Befestigungselement umfasst eine in einem montierten Zustand an dem Bauteil anliegende Anlagefläche. Ferner weist es eine in dem montierten Zustand dem Bauteil zugewandte Aufnahmeausnehmung auf, wobei die Aufnahmeausnehmung durch zumindest eine Seitenwand und einen Bodenabschnitt begrenzt ist. Die Seitenwand ist zumindest abschnittsweise mit zumindest einer in axialer Richtung des Befestigungselements wirksamen Hinterschneidung versehen. Der Bodenabschnitt ist durchbrechungsfrei ausgebildet.

Mit anderen Worten weist das Befestigungselement keine Komponente auf, die eine Stanzkante bilden würde und/oder die in ein vorbereitetes Loch des Bauteils eingeführt werden muss. Vielmehr ist das Befestigungselement mit einer Ausnehmung versehen, die sich von der Anlagefläche weg in das Innere des Elements erstreckt. Die Ausnehmung dient der Aufnahme von Material des Bauteils, das zur Fixierung des Befestigungselements in selbige gepresst wird. Ein Auspressen des Befestigungselements wird durch die an der zumindest einen Seitenwand vorgesehene Hinterschneidung verhindert. Beispielsweise weist die Hinterschneidung einen in einer Richtung von der Anlagefläche in das Innere der Aufnahmeausnehmung divergierenden Flächenabschnitt auf, sodass in die Aufnahmeausnehmung gepresstes Material des Bauteils, das dabei hinter die Hinterschneidung gedrückt wurde, das Befestigungselement mittels eines Formschlusses in axialer Richtung an dem Bauteil sichert. Die Hinterschneidung kann beispielsweise an einem Vorsprung ausgebildet sein, der von der Seitenwand in das Innere der Ausnehmung ragt, insbesondere in Bezug auf eine Längsachse des Befestigungselements in einer radialen Richtung.

Wie bereits erwähnt wurde, ist der Bodenabschnitt durchbrechungsfrei ausgebildet. D.h. er weist keine Öffnung auf, durch die das Innere der Ausnehmung mit der Umgebung in Verbindung steht. Dadurch wird verhindert, dass eine übermäßige Deformation des Bauteils beim Anbringen des Befestigungselements zu einer Perforation desselben führt. Der Bodenabschnitt bildet somit eine effiziente Begrenzung der Bauteilverformung.

Der Bodenabschnitt weist eine in die Aufnahmeausnehmung ragende Erhebung auf, die in Bezug auf eine durch die Anlagefläche definierte Ebene zurückversetzt ist, d.h. die Erhebung ragt nicht aus der Aufnahmeausnehmung heraus. Sie trägt dazu bei, dass das Material des Bauteils beim Befestigen des Befestigungselements in kontrollierter Form verformt wird. Insbesondere ist die Form der Erhebung so gewählt, dass zumindest ein Teil des in die Ausnehmung gepressten Materials des Bauteils hinter die Hinterschneidung gelenkt wird. Die Erhebung muss nicht sonderlich hoch sein, um den vorstehend beschriebenen Zweck erfüllen zu können. Bevorzugt beträgt die Höhe der Erhebung weniger als 50%, insbesondere weniger als 40% einer Tiefe der Aufnahmeausnehmung.

Die Erhebung kann koaxial zu einer Längsachse des Befestigungselements und/oder mittig in dem Bodenabschnitt angeordnet sein. Die Erhebung ist zumindest abschnittsweise konisch geformt, um ein das Material des Bauteils gleichmäßig lenkende Funktion zu erfüllen.

Die Grundform der Aufnahmeausnehmung kann im Wesentlichen die Form eines flachen Zylinders aufweisen. Insbesondere ist die Grundform ein flacher, gerader Kreiszylinder, so dass die Aufnahmeausnehmung in einem Querschnitt senkrecht zu einer Längsachse des Befestigungselements im Wesentlichen kreisförmig ist. Grundsätzlich ist es aber auch möglich, eine Aufnahmeausnehmung mit einem ovalen, dreieckigen, viereckigen oder mehreckigen (polygonalen) Querschnitt vorzusehen. Auch unregelmäßige Formgebungen des Querschnitts sind denkbar. Formgebungen mit einem von einer Kreisform abweichenden Querschnitt sind inhärent verdrehsicher.

Der Begriff "Grundform" schließt nicht aus, dass die Seitenwand/die Seitenwände der Ausnehmung und der Bodenabschnitt mit Erhebungen und Vertiefungen versehen sein können.

Die Anlagefläche kann ringförmig, insbesondere kreisförmig ausgebildet sein. Sie ist insbesondere vertiefungsfrei ausgebildet, sodass sie im Wesentlichen eine einzige Ebene definiert. Dadurch unterscheidet sie sich von Anlageflächen bekannter Befestigungselemente, die zur Bildung von Hinterschneidungen bei der Herstellung zumindest abschnittsweise eingedrückt werden, sodass lokale Vertiefungen entstehen.

Grundsätzlich ist es möglich, die ganze Seitenwand oder alle Seitenwände mit einer (umlaufenden) Hinterschneidung zu versehen. Gemäß einer Ausführungsform umfasst die Seitenwand jedoch mehrere, insbesondere regelmäßig verteilte Hinterschneidungsabschnitte. Ferner umfasst die Seitenwand Abschnitte, die hinterschneidungsfrei ausgebildet sind. Die Hinterschneidungsabschnitte und die hinterschneidungsfreien Abschnitte können alternierend angeordnet sein. Unter einem hinterschneidungsfreien Abschnitt ist ein Seitenwandabschnitt zu verstehen, der sich parallel zur Längsachse des Befestigungselements erstreckt oder der einen vom Bodenabschnitt zur Öffnung der Aufnahmeausnehmung hin divergierenden Verlauf aufweist.

Das Befestigungselement kann symmetrisch zu einer Längsachse des Befestigungselements ausgebildet sein. Beispielsweise ist das Befestigungselement rotationssymmetrisch oder drehsymmetrisch. Alternativ oder zusätzlich kann das Befestigungselement symmetrisch zu einer Ebene ausgebildet sein, die senkrecht zu einer Längsachse des Befestigungselements angeordnet ist. Beispielsweise weist das Befestigungselement an beiden axialen Stirnseiten eine Aufnahmeausnehmung auf. Eine symmetrische Ausgestaltung des Befestigungselements erleichtert dessen Handhabung, insbesondere die Zuführung des Elements zu einer Maschine zur Befestigung des Elements an dem Bauteil. Obwohl eine symmetrische Ausgestaltung bevorzugt wird, kann das Befestigungselement an den axialen Stirnseiten auch mit unterschiedlich gestalteten Aufnahmeausnehmungen versehen sein und/oder hinsichtlich der Außengeometrie asymmetrisch ausgebildet sein.

Wie vorstehend bereits erläutert wurde, kann eine Verdrehsicherung des an dem Bauteil befestigen Befestigungselements durch eine geeignete Formgebung des Querschnitts der Aufnahmeausnehmung erzielt werden. Zusätzlich oder alternativ können aber auch Verdrehsicherungsmerkmale vorhanden sein, die an der Seitenwand und/oder dem Bodenabschnitt vorgesehen sind. Verdrehsicherungsmerkmale können beispielsweise Rippen und/oder Vertiefungen sein, die in Bezug auf die Längsachse des Befestigungselements in radialer und/oder axialer Richtung verlaufen.

Die Erfindung betrifft ferner ein Zusammenbauteil umfassend ein Befestigungselement gemäß zumindest einer der vorstehend beschriebenen Ausführungsformen und ein insbesondere plattenförmiges Bauteil. Das Material des Bauteils ist durchbrechungsfrei in die Aufnahmeausnehmung gepresst, so dass es - gegebenenfalls in Zusammenwirkung mit der optionalen Erhebung - hinter die Hinterschneidung gedrückt ist und diese zur Bildung eines Formschlusses hintergreift. Aufgrund der durchbrechungsfreien Umformung des Bauteils, die wiederum auf die entsprechende Ausgestaltung des Bodenabschnitts des Befestigungselements zurückgeht, wird dessen Dichtigkeit nicht kompromittiert. Mit anderen Worten wird durch die Befestigung des Befestigungselements an dem Bauteil keine Durchbrechung in dem Bauteil erzeugt, die einen Durchtritt von gasförmigen und/oder flüssigen Medien gestatten würde.

Es wird außerdem ein Verfahren zur Herstellung des vorstehend beschriebenen Zusammenbauteils angegeben, wobei ein Befestigungselement gemäß zumindest einer der vorstehend beschriebenen Ausführungsformen zur Anlage an ein insbesondere plattenförmiges Bauteil gebracht wird. Erfindungsgemäß wird mittels einer Matrize Material des Bauteils in die Aufnahmeausnehmung gepresst, so dass ein Teil des Materials die Hinterschneidung hintergreift.

Gemäß einer Ausführungsform des Verfahrens ist die Matrize im Wesentlichen zylinderförmig oder weist einen leicht konvergierenden Querschnitt auf. Es versteht sich, dass die Formgebung der Matrize an die Querschnittsgeometrie und/oder die Tiefe der Aufnahmeausnehmung angepasst ist.

Bevorzugt wird das Befestigungselement an einem plattenförmigen Bauteil befestigt. Es sind jedoch auch andere Anwendungsmöglichkeiten vorstellbar. Beispielsweise kann das Bauteil auch ein weiteres Befestigungselement gleicher oder ähnlicher Bauweise sein. Daher wird erfindungsgemäß auch ein Zwischenstück zur Herstellung eines Zusammenbauteils angegeben, das ein erstes Befestigungselement gemäß zumindest einer der vorstehend beschriebenen Ausführungsformen und ein zweites Befestigungselement gemäß zumindest einer der vorstehend beschriebenen Ausführungsformen umfasst. Das Zwischenstück weist einen ersten Kopplungsabschnitt auf, der in der Aufnahmeausnehmung des ersten Befestigungselements aufnehmbar ist. Ferner weist das Zwischenstück einen zweiten Kopplungsabschnitt auf, der in der Aufnahmeausnehmung des zweiten Befestigungselements aufnehmbar ist. Der erste und der zweite Kopplungsabschnitt weisen jeweils zumindest eine Hinterschneidung auf, die dazu geeignet ist, mit der jeweiligen Hinterschneidung der entsprechenden Aufnahmeausnehmung zusammen zu wirken.

Mit anderen Worten dient das Zwischenstück als eine Art Adapter zur Kopplung zweier Befestigungselemente, die identisch oder auch unterschiedlich sein können. Entscheidend ist, dass das Zwischenstück für die jeweils vorliegende Aufnahmeausnehmung geeignete Kopplungsabschnitte aufweist. Besonders vorteilhaft ist es, wenn die Befestigungselemente oder zumindest deren Aufnahmeausnehmungen gleich sind, da das Zwischenstück dann - jedenfalls in Bezug auf die Kopplungsabschnitte - eventuell sogar symmetrisch aufgebaut sein kann.

Insbesondere ist das Zwischenstück symmetrisch zu einer Mittelebene ausgebildet, die senkrecht zu einer Längsachse des Zusammenbauteils bzw. zu einer Kopplungsachse der Befestigungselemente angeordnet ist.

Gemäß einer Ausführungsform des Zwischenstücks stehen der erste Kopplungsabschnitt und der zweite Kopplungsabschnitt direkt miteinander in Verbindung, d.h. es ist kein Mittelteil vorhanden, der die beiden Kopplungsabschnitte räumlich voneinander trennt. Das entsprechende Zwischenstück ist somit sehr kompakt. Grundsätzlich kann aber ein räumlich trennender Mittelteil vorgesehen sein, wodurch das Zwischenstück beispielsweise als Abstandshalter einsetzbar wäre.

Das Zwischenstück kann in einer Ebene senkrecht zu einer Längsachse des Zusammenbauteils bzw. zu einer Kopplungsachse der Befestigungselemente eine Einschnürung aufweisen. Beispielsweise sind die beiden Kopplungsabschnitte konische Elemente, deren konvergierenden Ende verbunden sind, sodass das Zwischenstück - bildlich gesprochen - im Querschnitt an einen Diabolo erinnert. Das Material des Zwischenstücks bzw. die geometrische Ausgestaltung der Hinterschneidungen der Kopplungsabschnitte sind so ausgebildet, dass die Kopplungsabschnitte unter elastischer Verformung der Hinterschneidungen der Kopplungsabschnitte und/oder der Befestigungselemente in die entsprechenden Ausnehmungen eingeführt werden können.

Die Erfindung betrifft ferner ein Zusammenbauteil umfassend ein erstes Befestigungselement gemäß zumindest einer der vorstehend beschriebenen Ausführungsformen und ein zweites Befestigungselement gemäß zumindest einer der vorstehend beschriebenen Ausführungsformen, wobei das erste Befestigungselement und das zweite Befestigungselement durch ein Zwischenstück gemäß zumindest einer der vorstehend beschriebenen Ausführungsformen miteinander gekoppelt sind. Insbesondere stehen die Anlageflächen des ersten Befestigungselements und die Anlagefläche des zweiten Befestigungselements in direktem Kontakt miteinander.

Weitere Ausführungsformen der Erfindung sind in den Ansprüchen, der Beschreibung und den Zeichnungen angegeben.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1: eine Perspektivansicht einer Ausführungsform des erfindungsgemäßen Befestigungselements,
- Fig. 2A: eine axiale Ansicht der dem Bauteil zugewandte Stirnseite des Befestigungselements,
- Fig. 2B: eine Schnittansicht durch das Befestigungselement gemäß Fig. 1,
- Fig. 2C: eine vergrößerte Ansicht eines Teils der Fig. 2B,
- Fig. 3A: das Befestigungselement gemäß Fig. 1 und eine komplementäre Matrize zur Befestigung des Befestigungselements an einem Blechteil,
- Fig. 3B: das Befestigungselement gemäß Fig. 1 in einem montierten Zustand,
- Fig. 4A: zwei Befestigungselemente und ein zur ihrer Kopplung vorgesehenes Zwischenstück,
- Fig. 4B: die beiden Befestigungselemente der Fig. 4A in einem gekoppelten Zustand und
- Fig. 5: eine Kombination mehrerer Befestigungselemente, die miteinander bzw. mit einem ebenen Blechteil gekoppelt sind.

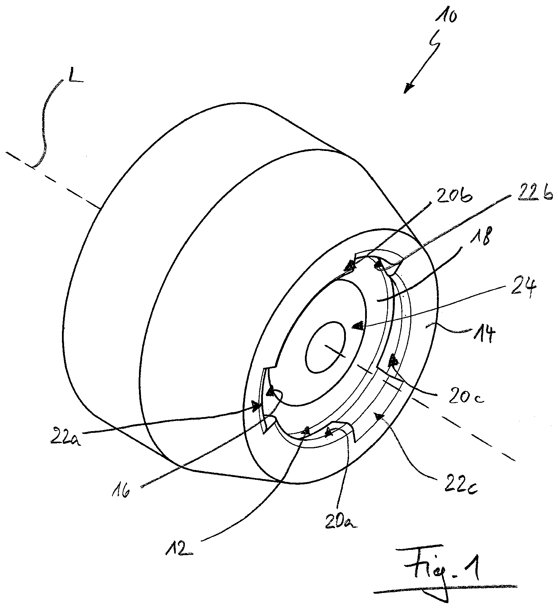

Fig. 1 zeigt ein Befestigungselement 10 mit einer Aufnahmeausnehmung 12, die dem Bauteil, beispielsweise ein Blechteil, zugewandt ist, an dem das Befestigungselement 10 befestigt werden soll. Die Aufnahmeausnehmung 12 wird durch eine umlaufende Seitenwand 16 und einen Bodenabschnitt 18 begrenzt. Eine ringförmige Anlagefläche 14 bildet das bauteilseitige Stirnende des Elements 10. Sie liegt bei und nach der Montage des Befestigungselements 10 an dem Bauteil an diesem an.

Die Außengeometrie des Befestigungselements 10 und die Ausgestaltung der Anlagefläche 14 kann frei gewählt und somit an die jeweils vorliegenden Anforderungen angepasst werden.

Von der Seitenwand 16 ragen Vorsprünge 20a, 20b, 20c in radialer Richtung in das Innere der Aufnahmeausnehmung 12 zu einer Längsachse L des Befestigungselements 10 hin. Die in einem Querschnitt im Wesentlichen keilförmigen Vorsprünge 20a, 20b 20c bilden Hinterschneidungen, deren Ausgestaltung nachfolgend noch eingehend erläutert wird. Zwischen den Vorsprüngen 20a, 20b, 20c sind jeweils hinterschneidungsfreie Abschnitte 22a, 22b, 22c vorgesehen. Die Seitenwand 16 weist im Bereich der Abschnitte 22a, 22b, 22c einen im Wesentlichen parallelen Verlauf zu der Längsachse L auf.

Von dem Bodenabschnitt 18 erstreckt sich koaxial zu der Längsachse L eine Erhebung 24, die eine im Wesentlichen konische Form aufweist. Zu bemerken ist, dass die Erhebung 24 nicht über eine durch die Anlagefläche 14 definierte Ebene herausragt, sondern relativ zu dieser zurückversetzt ist. Mit anderen Worten ragt sie nicht über die genannte Ebene hinaus in den Außenraum.

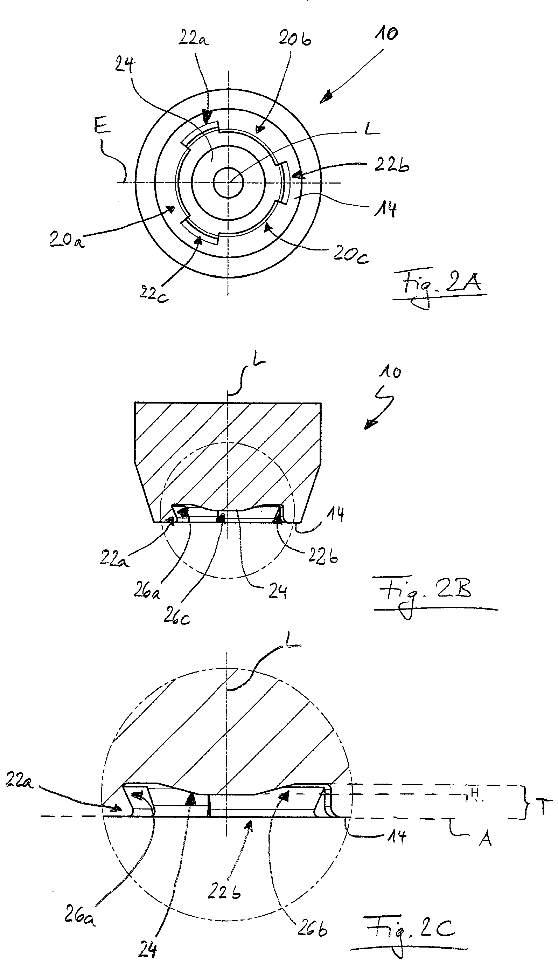

Fig. 2A zeigt eine axiale Ansicht des Befestigungselements 10 senkrecht auf die Anlagefläche 14, wodurch nochmals die drehsymmetrische Ausgestaltung des Befestigungselements 10 in Bezug auf die Längsachse L deutlich wird. Die Drehsymmetrie (3-zählige Symmetrie) wird durch die alternierende Anordnung der Vorsprünge 20a, 20b, 20c und der hinterschneidungsfreien Abschnitte 22a, 22b, 22c charakterisiert. Die Erhebung 24 ist dahingegen im Wesentlichen rotationssymmetrisch. Da sie u.a. dazu dient, bei einem Befestigen des Befestigungselements 10 an einem Bauteil Material hinter die Vorsprünge 20a, 20b, 20c zu drängen, kann auch vorgesehen sein, dass die Erhebung nicht rotationssymmetrisch sondern drehsymmetrisch ausgebildet ist. Auch eine andersartige regelmäßige oder unregelmäßige Ausgestaltung der Erhebung 24 ist grundsätzlich denkbar.

Fig. 2B zeigt eine Schnittansicht durch das Befestigungselement 10 in einer in Fig. 2A angedeuteten Schnittebene E.

Fig. 2C zeigt eine Vergrößerung des in Fig. 2B durch einen gestrichelten Kreis markierten Bereichs. Sie zeigt in Zusammenschau mit Fig. 2A nochmals deutlich, dass die Anlagefläche 14 keine Vertiefungen oder Erhebungen aufweist, so dass sie eine einzige Anlageebene A definiert. Grundsätzlich kann es vorgesehen sein, auf der Anlagefläche 14 Erhebungen und/oder Vertiefungen vorzusehen, beispielsweise um eine Verdrehsicherung zu bewirken. Bevorzugt ist es jedoch, eine Verdrehsicherung durch andere Maßnahmen zu erzielen. Bei dem Befestigungselement 10 wird die Verdrehsicherung durch die alterierende Anordnung der Vorsprünge 20a, 20b, 20c und der hinterschneidungsfreien Abschnitte 22a, 22b und 22c erreicht. Grundsätzlich können auch an dem Bodenabschnitt 18 und/oder an der Seitenwand 16 radiale bzw. axiale Rippen und/oder Vertiefungen vorgesehen sein, die ein Verdrehen des Befestigungselements 10 in einem montierten Zustand verhindern.

Fig. 2C verdeutlicht ferner, dass die Vorsprünge 20a, 20b Hinterschneidungen 26a, 26b bilden. Die durch den Vorsprung 20c gebildete Hinterschneidung ist in der gezeigten Schnittansicht nicht zu erkennen.

Außerdem ist zu erkennen, dass eine Höhe H der Erhebung 24, d.h. der Abstand zwischen ihrem höchsten Punkt und dem Bodenabschnitt 18 deutlich kleiner ist als eine Tiefe T der Aufnahmeausnehmung 12, die durch den Abstand zwischen der Anlageebene A und dem Bodenabschnitt 18 definiert wird.

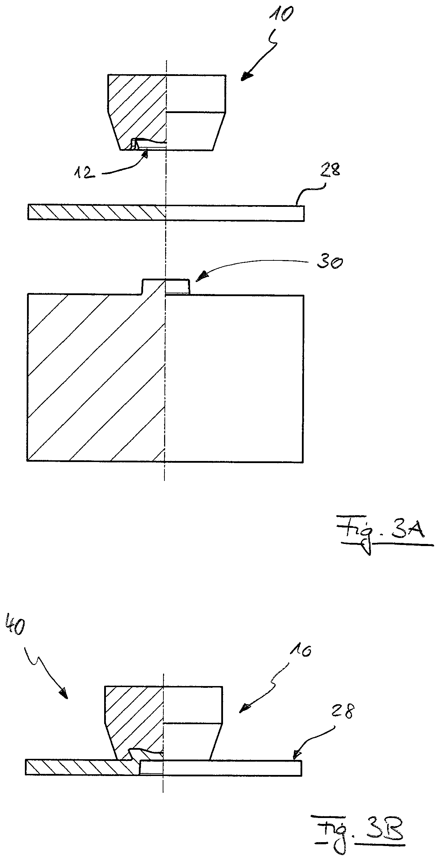

Fig. 3A verdeutlicht das Verfahren zur Befestigung des Befestigungselements 10 gemäß Fig. 1 an einem Blechteil 28. Zu diesem Zweck ist eine im Wesentlichen zylinderförmige Matrize 30 vorgesehen. Bewegt man das Befestigungselement und die Matrize 30 aufeinander zu, so wird ein Bereich des Blechteils 28 durch die Wirkung der Matrize 30 in die Aufnahmeausnehmung 12 gedrückt. Die Erhebung 24 bewirkt dabei, dass ein Teil des Materials des Blechteils 28 hinter die Hinterschneidungen 26a, 26b gedrückt wird, um so eine zuverlässige formschlüssige Verbindung zwischen dem Befestigungselement 10 und dem Blechteil 28 zu erzeugen. Die im Zuge des Befestigungsprozesses auftretende Umformung des Blechteils umfasst somit ein massives Vorwärtsfließpressen.

Fig. 3B zeigt ein Zusammenbauteil 40 aus dem Element 10 und dem Blechteil 28, dass durch das vorstehend beschriebene Verfahren hergestellt wurde.

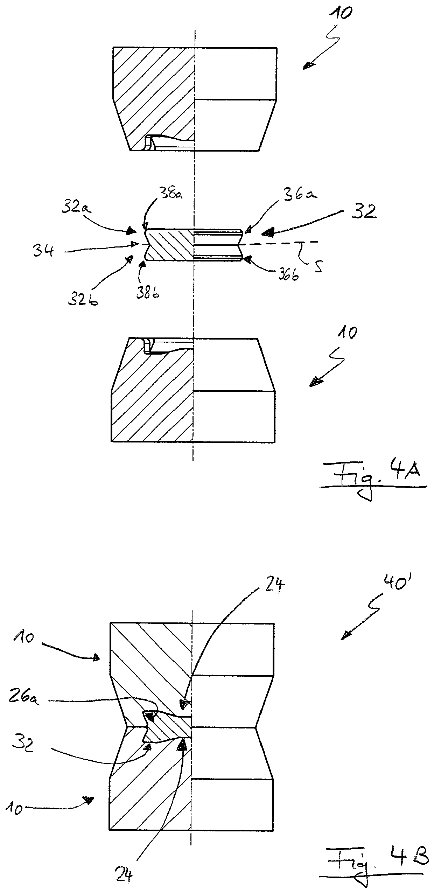

Fig. 4A zeigt zwei Befestigungselemente 10 sowie ein Zwischenstück 32, durch das die beiden Elemente 10 miteinander gekoppelt werden können. Das Zwischenstück 32 umfasst zwei konische Kopplungsabschnitte 32a, 32b, die in einer Schnittansicht (linke Seite) jeweils einen im Wesentlichen trapezförmigen Querschnitt aufweisen. Die Kopplungsabschnitte 32a, 32b stehen in einer Symmetrieebene S direktem Kontakt zueinander, so dass eine Einschnürung 34 gebildet wird. Die Umfangsgeometrie des Zwischenstücks 32 ist an die der Aufnahmeausnehmung 12 angepasst, so dass ein Einführen des jeweiligen Kopplungsabschnitts 32a, 32b in die entsprechende Aufnahmeausnehmung 12 des jeweiligen Elements 10 möglich ist. Dabei werden die Vorsprünge 20a, 20b, 20c und/oder Außenkanten 36a, 36b der Kopplungsabschnitte 32a, 32b im Wesentlichen nur elastisch verformt. Nach dem Abschluss des Einführprozesses wirken die Kopplungsabschnitte 32a, 32b mit den Hinterschneidungen 26a, 26b der beiden Elemente 10 formschlüssig zusammen, um diese zuverlässig miteinander zu koppeln. Um das Einführen des Zwischenstücks 32 zu erleichtern, sind die Kopplungsabschnitte 32a, 32b jeweils mit einer Einführschräge 38a bzw. 38b versehen. Außerdem sind die die Aufnahmeausnehmung 12 begrenzenden Kanten abgerundet.

Fig. 4B zeigt ein Zusammenbauteil 40', das aus den in Fig. 4A gezeigten Komponenten hervorgegangen ist. Die Erhebungen 24 der Befestigungselemente 10 haben zu einer Verformung des Zwischenstücks 32 geführt, wobei ein Teil dessen Materials zusätzlich hinter die Hinterschneidungen 26a, 26b gepresst wurde, um die Verbindung zwischen den Elementen 10 noch fester zu gestalten. Die Formgebung des Zwischenstücks 32 bzw. die der Kopplungsabschnitte 32a, 32b sowie die Wahl des Materials des Zwischenstücks 32 ist an die Formgebung der Vorsprünge 20a, 20b, 20c bzw. die Härte des Materials des Befestigungselements 10 anzupassen, um ein "Einschnappen" des Zwischenstücks zu ermöglichen, ohne dass die Vorsprünge 20a, 20b, 20c und/oder die Außenkanten 36a, 36b abgeschert werden.

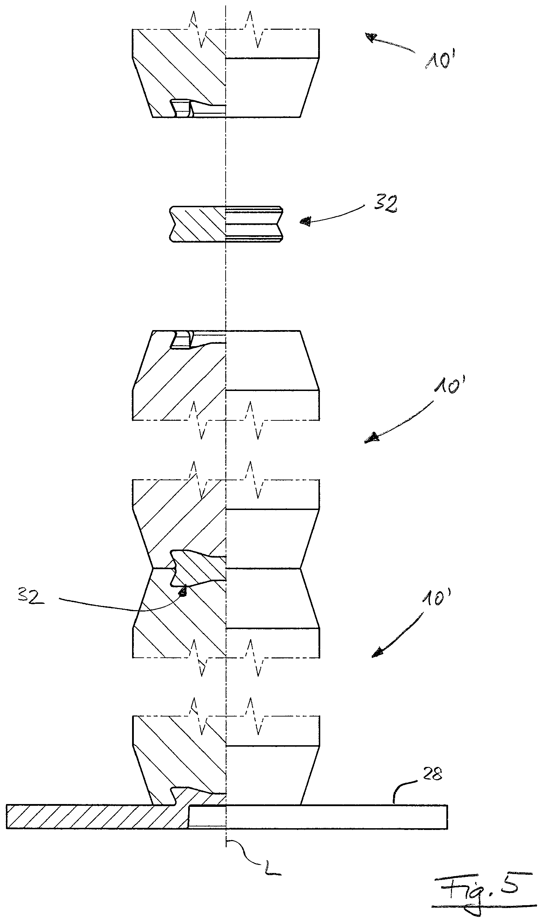

Fig. 5 verdeutlicht die Vielseitigkeit des erfindungsgemäßen Befestigungselements. Eine Ausführungsform 10' des Befestigungselements ist - ähnlich wie in Fig. 3B - mit einem Blechteil 28 verbunden. Das Befestigungselement 10' ist bezüglich einer Ebene, die senkrecht zu der Längsachse L angeordnet ist, symmetrisch aufgebaut. Mit anderen Worten weisen beide Stirnseiten des Befestigungselements 10' eine identisch aufgebaute Aufnahmeausnehmung 12 auf. Diese Ausgestaltung gestattet es, dass mit dem Blechteil 28 gekoppelte Befestigungselement 10' mit einem weiteren Befestigungselement 10' zu koppeln, das wiederum mit einem dritten Befestigungselement 10' koppelbar ist. Dabei gelangen Zwischenstücke 32 zum Einsatz, die vorstehend anhand der Fig. 4A und 4B beschrieben wurden. Ersichtlich kann eine beliebig lange Kette gekoppelter Befestigungselemente 10' hergestellt werden. Grundsätzlich ist es auch möglich, unterschiedlich ausgestaltete Befestigungselemente miteinander zu koppeln, falls dies erforderlich sein sollte. Die Verwendung gleichartiger und insbesondere symmetrischer Befestigungselemente ist jedoch aus Kosten- und Handlinggründen bevorzugt.

Die nicht dargestellten Mittelabschnitte der Befestigungselement 10' können beliebig ausgestaltet sein und auch bei Bedarf Abschnitte ausweisen, die bestimmte Funktionen erfüllen.

Abweichend von den vorstehend beschriebenen Ausgestaltungen kann die Seitenwand 16 auch einen umlaufenden Vorsprung aufweisen, d.h. die hinterschneidungsfreien Abschnitte 22a, 22b, 22c entfallen. Wie eingangs erwähnt wurde, ist es auch möglich, eine nicht kreisförmige Grundform des Querschnitts der Aufnahmeausnehmung 12 vorzusehen, um eine Verdrehsicherung zu bewirken.

### Bezugszeichenliste

- 10, 10': Befestigungselement
- 12: Aufnahmeausnehmung
- 14: Anlagefläche
- 16: Seitenwand
- 18: Bodenabschnitt
- 20a, 20b, 20c: Vorsprung
- 22a, 22b, 22c: hinterschneidungsfreier Abschnitt
- 24: Erhebung
- 26a, 26b: Hinterschneidung
- 28: Blechteil
- 30: Matrize
- 32: Zwischenstück
- 32a, 32b: Kopplungsabschnitt
- 34: Einschnürung
- 36a,36b: Außenkante
- 38a, 38b: Einführschräge
- 40,40': Zusammenbauteil

- L: Längsachse
- E: Schnittebene
- A: Anlageebene
- H: Höhe
- T: Tiefe
- S: Symmetrieebene

## Patentansprüche

1. Befestigungselement zur Anbringung an einem Bauteil (28), wobei das Befestigungselement eine in einem montierten Zustand an dem Bauteil (28) anliegende Anlagefläche (14) und eine in dem montierten Zustand dem Bauteil (28) zugewandte Aufnahmeausnehmung (12) aufweist, wobei die Aufnahmeausnehmung (12) durch zumindest eine Seitenwand (16) und einen Bodenabschnitt (18) begrenzt ist, wobei die Seitenwand (16) zumindest abschnittsweise mit zumindest einer in axialer Richtung des Befestigungselements wirksamen Hinterschneidung (26a, 26b, 26c) versehen ist und wobei der Bodenabschnitt (18) durchbrechungsfrei ausgebildet ist, wobei der Bodenabschnitt eine in die Aufnahmeausnehmung (12) ragende Erhebung (24) aufweist, die in Bezug auf eine durch die Anlagefläche (14) definierte Ebene (A) zurückversetzt ist,
**dadurch gekennzeichnet, dass**
eine Außenseite der Erhebung (24) zumindest abschnittsweise konisch geformt ist.

2. Befestigungselement nach Anspruch 1,
**dadurch gekennzeichnet, dass**
die Erhebung (24) eine Höhe (H) aufweist, die weniger als 50%, insbesondere weniger als 40% einer Tiefe (T) der Aufnahmeausnehmung (12) beträgt.

3. Befestigungselement nach Anspruch 1 oder 2,
**dadurch gekennzeichnet, dass**
die Erhebung (24) koaxial zu einer Längsachse (L) des Befestigungselements angeordnet ist und/oder mittig in dem Bodenabschnitt (18) angeordnet ist.

4. Befestigungselement nach zumindest einem der vorstehenden Ansprüche,
**dadurch gekennzeichnet, dass**
die Aufnahmeausnehmung (12) im Wesentlichen die Form eines flachen Zylinders aufweist.

5. Befestigungselement nach zumindest einem der vorstehenden Ansprüche,
**dadurch gekennzeichnet, dass**
die Anlagefläche (14) ringförmig, insbesondere kreisförmig ist, und/oder dass die Anlagefläche (14) vertiefungsfrei ausgebildet ist, so dass sie eine einzige Ebene (A) definiert.

6. Befestigungselement nach zumindest einem der vorstehenden Ansprüche,
**dadurch gekennzeichnet, dass**
die Seitenwand (16) mehrere, insbesondere regelmäßig verteilte Hinterschneidungsabschnitte (26a, 26b, 26c) und Abschnitte (22a, 22b, 22c) umfasst, die hinterschneidungsfrei ausgebildet sind.

7. Befestigungselement nach zumindest einem der vorstehenden Ansprüche,
**dadurch gekennzeichnet, dass**
das Befestigungselement symmetrisch zu einer Längsachse (L) des Befestigungselements ausgebildet ist und/oder dass
das Befestigungselement symmetrisch zu einer Ebene ausgebildet ist, die senkrecht zu einer Längsachse (L) des Befestigungselements angeordnet ist.

8. Befestigungselement nach zumindest einem der vorstehenden Ansprüche,
**dadurch gekennzeichnet, dass**
die Seitenwand (16) und/oder der Bodenabschnitt (18) Verdrehsicherungsmerkmale aufweisen, insbesondere in radialer und/oder axialer Richtung verlaufende Rippen und/oder Vertiefungen.

9. Zusammenbauteil umfassend ein Befestigungselement gemäß zumindest einem der Ansprüche 1 bis 8 und ein insbesondere plattenförmiges Bauteil (28), wobei das Material des Bauteils (28) durchbrechungsfrei in die Aufnahmeausnehmung (12) gepresst ist und ein Teil des Material die Hinterschneidung (26a, 26b, 26c) hintergreift.

10. Verfahren zur Herstellung eines Zusammenbauteils gemäß Anspruch 9, wobei ein Befestigungselement gemäß zumindest einem der Ansprüche 1 bis 8 zur Anlage an ein insbesondere plattenförmiges Bauteil (28) gebracht wird und wobei mittels einer Matrize (30) Material des Bauteils (28) in die Aufnahmeausnehmung (12) gepresst wird, so dass ein Teil des Materials die Hinterschneidung (26a, 26b, 26c) hintergreift, insbesondere wobei die Matrize (30) im Wesentlichen zylinderförmig ist.

11. Zwischenstück zur Herstellung eines Zusammenbauteils umfassend ein erstes Befestigungselement gemäß zumindest einem der Ansprüche 1 bis 8 und ein zweites Befestigungselement gemäß zumindest einem der Ansprüche 1 bis 8, wobei das Zwischenstück einen ersten Kopplungsabschnitt (32a) aufweist, der in der Aufnahmeausnehmung (12) des ersten Befestigungselements aufnehmbar ist, und einen zweiten Kopplungsabschnitt (32b) aufweist, der in der Aufnahmeausnehmung (12) des zweiten Befestigungselements aufnehmbar ist, wobei der erste und der zweite Kopplungsabschnitt (32a, 32b) jeweils zumindest eine Hinterschneidung aufweisen, die dazu geeignet sind, mit der jeweiligen Hinterschneidung (26a, 26b, 26c) der entsprechenden Aufnahmeausnehmung (12) zusammenzuwirken, insbesondere wobei das Zwischenstück symmetrisch zu einer Mittelebene ausgebildet ist, die senkrecht zu einer Längsachse (L) des Zusammenbauteils bzw. zu einer Kopplungsachse der Befestigungselemente angeordnet ist.

12. Zwischenstück nach Anspruch 11,
**dadurch gekennzeichnet, dass**
das der erste Kopplungsabschnitt (32a) und der zweite Kopplungsabschnitt (32b) direkt miteinander in Verbindung stehen.

13. Zwischenstück nach zumindest einem der Ansprüche 11 oder 12,
**dadurch gekennzeichnet, dass**
das Zwischenstück in einer Ebene senkrecht zu einer Längsachse (L) des Zusammenbauteils bzw. zu einer Kopplungsachse der Befestigungselemente eine Einschnürung (34) aufweist.

14. Zusammenbauteil umfassend ein erstes Befestigungselement gemäß zumindest einem der Ansprüche 1 bis 8 und ein zweites Befestigungselement gemäß zumindest einem der Ansprüche 1 bis 8, wobei das erste Befestigungselement und das zweite Befestigungselement durch ein Zwischenstück gemäß zumindest einem der Ansprüche 11 bis 13 miteinander gekoppelt sind, insbesondere wobei die Anlagefläche (14) des ersten Befestigungselements und die Anlagefläche (14) des zweiten Befestigungselements in direktem Kontakt miteinander stehen.

## Claims

1. A fastener element for attachment to a component (28), wherein the fastener element has a contact surface (14) which contacts the component (28) in an installed state and has a mounting recess (12) facing the component (28) in the installed state; wherein the mounting recess (12) is bounded by at least one sidewall (16) and by one base section (18), with the sidewall (16) being provided, at least sectionally, with at least one undercut (26a, 26b, 26bc) which is effective in the axial direction of the fastener element; and wherein the base section (18) is formed free of any aperture, with the base section having a raised portion (24) which projects into the mounting recess (12) and which is set back in relation to a plane (A) defined by the contact surface (24),
**characterized in that**
an outer side of the raised portion (24) is conically shaped at least sectionally.

2. A fastener element in accordance with claim 1,
**characterized in that**
the raised portion (24) has a height (H) which is less than 50% and in particular less than 40% of a depth (T) of the mounting recess (12).

3. A fastener element in accordance with claim 1 or claim 2,
**characterized in that**
the raised portion (24) is arranged coaxially to a longitudinal axis (L) of the fastener element and/or is arranged centrally in the base section (18).

4. A fastener element in accordance with at least one of the preceding claims,
**characterized in that**
the mounting recess (12) essentially has the shape of a shallow cylinder.

5. A fastener element in accordance with at least one of the preceding claims,
**characterized in that**
the contact surface (14) is in the shape of a ring, in particular is circular; and/or **in that** the contact surface (14) is configured free of recesses so that it defines a single plane (A).

6. A fastener element in accordance with at least one of the preceding claims,
**characterized in that**
the sidewall (16) comprises a plurality of undercut sections (26a, 26b, 26c) which are in particular regularly distributed and sections (22a, 22b, 22c) which are free of undercuts.

7. A fastener element in accordance with at least one of the preceding claims,
**characterized in that**
the fastener element is configured symmetrical to a longitudinal axis (L) of the fastener element; and/or **in that**
the fastener element is configured symmetrical to a plane which is arranged perpendicular to a longitudinal axis (L) of the fastener element.

8. A fastener element in accordance with at least one of the preceding claims,
**characterized in that**
the sidewall (16) and/or the base section (18) has/have features providing security against rotation, in particular ribs and/or recesses extending in the radial and/or in the axial direction.

9. A component assembly comprising a fastener element in accordance with at least one of the claims 1 to 8 and a component (26) which is in particular of plate-like form, wherein the material of the component (28) is pressed free of any aperture into the mounting recess (12) and a part of the material engages behind the undercut (26a, 26b, 26c).

10. A method for the manufacture of a component assembly in accordance with claim 9, wherein a fastener element in accordance with at least one of the claims 1 to 8 is brought into contact with a component (28), in particular a component of plate-like shape, and wherein material of the component (28) is pressed into the mounting recess (12) by means of a die button (30) so that a part of the material engages behind the undercut (26a, 26b, 26c), with the die button (30) in particular being substantially cylindrical.

11. An intermediate piece for the manufacture of a component assembly comprising a first fastener element in accordance with at least one of the claims 1 to 8 and a second fastener element in accordance with at least one of the claims 1 to 8, wherein the intermediate piece has a first coupling section (32a) that can be received in the mounting recess (12) of the first fastener element and a second coupling section (32b) that can be received in the mounting recess (12) of the second fastener element, wherein the first and the second coupling sections (32a, 32b) each have at least one undercut with the undercuts being suitable to cooperate with the respective undercut (26a, 26b, 26c) of the corresponding mounting recess (12), with the intermediate piece in particular being configured symmetrical to a central plane which is arranged perpendicular to a longitudinal axis (L) of the component assembly or to a coupling axis of the fastener elements.

12. An intermediate piece in accordance with claim 11,
**characterized in that**
the first coupling section (32a) and the second coupling section (32b) are directly in connection with one another.

13. An intermediate piece in accordance with at least one of the claims 11 or 12,
**characterized in that**
the intermediate piece has a constriction (34) in a plane perpendicular to a longitudinal axis (L) of the component assembly or to a coupling axis of the fastener elements.

14. A component assembly comprising a first fastener element in accordance with at least one of the claims 1 to 8 and a second fastener element in accordance with at least one of the claims 1 to 8, wherein the first fastener element and the second fastener element are coupled to one another by an intermediate piece in accordance with at least one of the claims 11 to 13, with the contact surface (14) of the first fastener element and the contact surface (14) of the second fastener element in particular being in direct contact with one another.

## Revendications

1. Élément de fixation pour le montage sur un composant (28), l'élément de fixation présentant une surface d'appui (14) venant en appui contre le composant (28) dans l'état monté et un évidement de logement (12) tourné vers le composant dans l'état monté, dans lequel l'évidement de logement (12) est limité par au moins une paroi latérale (16) et une portion de fond (18), la paroi latérale (16) est pourvue au moins localement d'au moins une contre-dépouille (26a, 26b, 26c) active en direction axiale de l'élément de fixation, et la portion de fond (18) est réalisée sans interruption, la portion de fond présente une élévation (24) qui pénètre dans l'évidement de logement (12) et qui est en retrait par rapport à un plan (A) défini par la surface d'appui (14),
**caractérisé en ce que**
une face extérieure de l'élévation (24) est formée au moins localement sous forme conique.

2. Élément de fixation selon la revendication 1,
**caractérisé en ce que**
l'élévation (24) présente une hauteur (H) qui est inférieure à 50 %, en particulier inférieure à 40 % d'une profondeur (T) de l'évidement de logement (12).

3. Élément de fixation selon la revendication 1 ou 2,
**caractérisé en ce que**
l'élévation (24) est agencée coaxialement à un axe longitudinal (L) de l'élément de fixation et/ou au milieu dans la portion de fond (18).

4. Élément de fixation selon l'une des revendications précédentes,
**caractérisé en ce que**
l'évidement de logement (12) présente sensiblement la forme d'un cylindre plat.

5. Élément de fixation selon l'une des revendications précédentes,
**caractérisé en ce que**
la surface d'appui (14) est de forme annulaire, en particulier circulaire, et/ou la surface d'appui (14) est réalisée sans renfoncement de manière à définir un seul plan (A).

6. Élément de fixation selon l'une des revendications précédentes,
**caractérisé en ce que** la paroi latérale (16) comprend plusieurs portions de contre-dépouille (26a, 26b, 26c) en particulier réparties régulièrement, et des portions (22a, 22b, 22c) qui sont réalisées sans contre-dépouille.

7. Élément de fixation selon l'une des revendications précédentes,
**caractérisé en ce que**
l'élément de fixation est réalisé symétriquement à un axe longitudinal (L) de l'élément de fixation et/ou **en ce que**
l'élément de fixation est réalisé symétriquement à un plan qui est disposé perpendiculairement à un axe longitudinal (L) de l'élément de fixation.

8. Élément de fixation selon l'une des revendications précédentes,
**caractérisé en ce que**
la paroi latérale (16) et/ou la portion de fond (18) présentent des caractéristiques de blocage anti-rotation, en particulier des nervures et/ou des renfoncements qui s'étendent en direction radiale et/ou axiale.

9. Composant assemblé comportant un élément de fixation selon l'une des revendications 1 à 8 et un composant en particulier en forme de plaque (28), dans lequel le matériau du composant (28) est pressé sans interruption dans l'évidement de logement (12) et engage par l'arrière une partie du matériau de la contre-dépouille (26a, 26b, 26c).

10. Procédé de réalisation d'un composant d'assemblage selon la revendication 9, dans lequel un élément de fixation selon l'une au moins des revendications 1 à 8 est mis en appui contre un composant (28) en particulier en forme de plaque, et le matériau du composant (28) est pressé dans l'évidement de logement (12) au moyen d'une matrice (30), de sorte qu'une partie du matériau engage par l'arrière la contre-dépouille (26a, 26b, 26c), la matrice (30) étant en particulier sensiblement en forme de cylindre.

11. Pièce intermédiaire pour la réalisation d'un composant assemblé, comportant un premier élément de fixation selon l'une au moins des revendications 1 à 8 et un second élément de fixation selon l'une au moins des revendications 1 à 8, la pièce intermédiaire comprenant une première portion de couplage (32a) qui peut être logée dans l'évidement de logement (12) du premier élément de fixation, et une seconde portion de couplage (32b) qui peut être logée dans l'évidement de logement (12) du second élément de fixation, les première et seconde portions de couplage (32a, 32b) comprenant chacune au moins une contre-dépouille qui est apte à coopérer avec la contre-dépouille respective (26a, 26b, 26c) l'évidement de logement correspondant (12), la pièce intermédiaire étant en particulier réalisée symétriquement à un plan médian qui est disposé perpendiculairement à un axe longitudinal (L) du composant assemble ou à un axe de couplage des éléments de fixation.

12. Pièce intermédiaire selon la revendication 11,
**caractérisée en ce que**
la première portion de couplage (32a) et la seconde portion de couplage (32b) sont reliées directement l'une à l'autre.

13. Pièce intermédiaire selon l'une au moins des revendications 11 ou 12,
**caractérisée en ce que**
la pièce intermédiaire présente un rétrécissement (34) dans un plan perpendiculaire à un axe longitudinal (L) du composant d'assemblage ou à un axe de couplage des éléments de fixation.

14. Composant assemblé comportant un premier élément de fixation selon l'une au moins des revendications 1 à 8 et un second élément de fixation selon l'une au moins des revendications 1 à 8, le premier élément de fixation et le second élément de fixation étant couplés l'un à l'autre par une pièce intermédiaire selon l'une au moins des revendications 11 à 13, dans lequel en particulier la surface d'appui (14) du premier élément de fixation et la surface d'appui (14) du second élément de fixation sont en contact direct l'une avec l'autre.
